# FASCICULE DE BREVET EUROPEEN

(11) **EP 3 548 766 B1**
(45) Date de publication et mention de la délivrance du brevet: **08.02.2023**
(21) Numéro de dépôt: 17804916.9
(22) Date de dépôt: 29.11.2017
(51) Int. Cl.: F16F 15/14

(54) **DISPOSITIF D'AMORTISSEMENT PENDULAIRE**
PENDELDÄMPFUNGSVORRICHTUNG
PENDULUM DAMPING DEVICE

(30) Priorité: 30.11.2016 FR 1661719; 30.11.2016 FR 1661721
(43) Date de publication de la demande: 09.10.2019
(73) Titulaire: Valeo Embrayages, 80009 Amiens Cedex 2 (FR)
(72) Inventeur: VERHOOG, Roel, 80009 Amiens (FR)
(74) Mandataire: Valeo Powertrain Systems
(86) Numéro de dépôt international: PCT/EP2017/080878
(87) Numéro de publication internationale: WO 2018/100006

(56) Documents cités:
- EP-A1- 2 719 920
- DE-A1-102013 214 829
- DE-A1-102014 116 855
- FR-A1- 2 986 592

## Description

### DOMAINE TECHNIQUE DE L'INVENTION

La présente invention concerne un dispositif d'amortissement pendulaire, notamment de véhicule automobile.

### ARRIERE PLAN TECHNOLOGIQUE DE L'INVENTION

Un tel dispositif, également appelé oscillateur pendulaire ou pendule, est notamment destiné à équiper une transmission d'un véhicule automobile.

Dans une transmission de véhicule automobile, on associe généralement au moins un système d'amortissement de torsion à un embrayage apte à relier sélectivement le moteur à une boîte de vitesses, tel qu'un embrayage à friction ou un appareil d'accouplement hydrocinétique comportant un embrayage de verrouillage.

En effet, un moteur à explosion génère des acyclismes du fait des explosions se succédant dans les cylindres du moteur, ces acyclismes variant notamment en fonction du nombre de cylindres.

Le système d'amortissement, qui comporte classiquement des ressorts et des éléments de friction, a par conséquent pour fonction de filtrer les vibrations dues aux acyclismes de rotation du moteur et intervient avant la transmission du couple moteur à la boîte de vitesses. Cela permet d'éviter que de telles vibrations passent dans la boîte de vitesses et y provoquent des chocs, bruits et nuisances sonores indésirables.

Afin d'améliorer encore la filtration, il est connu d'utiliser un dispositif d'amortissement pendulaire, en plus du système d'amortissement usuel.

Par exemple, la demande de brevet FR2986592, au nom de la demanderesse, divulgue un dispositif de transmission de couple selon le préambule de la revendication 1 comprenant des moyens d'amortissement pendulaire constitués par des masses pendulaires montées de façon mobile sur un support annulaire agencé entre un élément d'entrée de couple et un élément de sortie de couple, et entraîné en rotation autour de son axe.

En réaction aux irrégularités ou acyclismes de rotation, chaque masse se déplace de manière à ce que son centre de gravité oscille de façon pendulaire. La fréquence d'oscillation de chaque masse est proportionnelle à la vitesse de rotation de l'arbre moteur, le multiple correspondant pouvant par exemple prendre une valeur proche du rang de l'harmonique prépondérant des vibrations responsables des fortes irrégularités de rotation au voisinage du ralenti.

Dans cet exemple, le support annulaire comprend deux tôles annulaires en vis-à-vis, assemblées par des entretoises, entre lesquelles les masses pendulaires, montées en périphérie, sont animées d'un mouvement pendulaire en fonctionnement.

Ces masses sont de la forme générale d'un segment circulaire et comportent chacune une paire de trous oblongs en forme d'arc, dont la concavité est tournée radialement vers l'extérieur du support.

Des ouvertures oblongues, également en forme d'arc, mais dont la concavité est tournée radialement vers l'intérieur du support, sont ménagées dans les tôles annulaires en regard des trous des masses pendulaires.

Des rouleaux de guidage, dont la partie médiane roule à l'intérieur des trous oblongs des masses pendulaires, et dont les extrémités roulent dans les ouvertures oblongues, permettent le fonctionnement pendulaire du dispositif.

Dans les différents modes de réalisation du dispositif de transmission de couple de la demande de brevet précitée, les rouleaux de guidage sont maintenus axialement entre les tôles annulaires par des épaulements radiaux, ou des collerettes agencées entre les masses pendulaires et des faces intérieures de ces tôles.

Pour éviter une perte des rouleaux de guidage par un écartement latéral des tôles annulaires sous l'effet de la force centrifuge, l'épaisseur de ces tôles annulaires doit être d'autant plus grande qu'une vitesse de rotation en fonctionnement est élevée.

Le nombre d'entretoises entre les tôles annulaires peut aussi être augmenté.

Mais l'entité inventive a constaté qu'un accroissement de l'épaisseur des tôles annulaires et/ ou du nombre d'entretoises, qui conduisait à une augmentation de l'inertie du dispositif d'amortissement pendulaire, était préjudiciable au fonctionnement de la boîte de vitesses accouplée, en particulier dans le cas d'une boîte de vitesses manuelle.

### DESCRIPTION GENERALE DE L'INVENTION

Le but de la présente invention est donc de réaliser un dispositif d'amortissement pendulaire apte à fonctionner à grande vitesse tout en palliant l'inconvénient ci-dessus.

Ce dispositif d'amortissement pendulaire de transmission de véhicule automobile est du type de ceux comprenant:
- au moins un support annulaire constitué au moins de deux tôles annulaires en vis-à-vis, agencé entre un élément d'entrée de couple et un élément de sortie de couple, et entraîné en rotation autour d'un axe de la transmission;
- des masses pendulaires montées de façon mobile entre les tôles annulaires en périphérie, ces masses pendulaires étant de la forme générale d'un segment circulaire et comportant chacune une paire de trous oblongs en forme d'arc présentant une première concavité tournée radialement vers l'extérieur du support annulaire;
- des rouleaux de guidage, présentant une partie médiane roulant à l'intérieur des trous oblongs, et des extrémités roulant dans des ouvertures oblongues formées dans les tôles annulaires en regard des trous oblongs et présentant une forme d'arc ayant une seconde concavité tournée radialement vers l'intérieur du support annulaire;
- des moyens de maintien axial des rouleaux de guidage entre les tôles annulaires;
- des moyens de liaison entre lesdites tôles annulaires.

Selon l'invention, ces moyens de liaison comprennent au moins une entretoise de liaison traversant au moins l'une des masses pendulaires.

Selon l'invention, cette entretoise de liaison peut être constituée d'un cylindre comportant à chaque partie extrémale des gorges annulaires maintenues dans des trous circulaires des tôles annulaires.

Alternativement, cette entretoise de liaison peut être constituée d'un rivet inséré dans un tube.

Selon l'invention encore, l'entretoise de liaison peut comporter un manchon en matériau élastique.

De préférence, ce matériau est un élastomère.

Dans le dispositif d'amortissement pendulaire selon l'invention, l'entretoise de liaison peut traverser une lumière allongée reliant les trous oblongs des masses pendulaires. Dans cette configuration, il existe une ouverture dans la masse contenant les deux rouleaux de guidage et l'entretoise.

Avantageusement, l'entretoise de liaison coopère dans une direction radiale avec des bords de ladite lumière.

Alternativement ou simultanément, l'entretoise de liaison coopère dans une direction tangentielle avec des bords de la lumière et avec les rouleaux de guidage.

Dans le dispositif d'amortissement pendulaire selon l'invention, cette lumière est en forme d'arc présentant une troisième concavité tournée radialement vers l'extérieur du support annulaire.

Selon l'invention, les rouleaux de guidage du dispositif d'amortissement pendulaire comportent en outre des moyens de butée axiale empêchant un écartement latéral des tôles annulaires.

Selon l'invention, ces moyens de butée axiale peuvent être constitués par des collerettes extérieures agencées aux extrémités des rouleaux de guidage coopérant axialement avec des faces extérieures des tôles annulaires.

Ces collerettes extérieures peuvent avoir une hauteur comprise entre 0,3 mm et 2 mm.

Ces collerettes extérieures sont avantageusement rapportées sur les extrémités des rouleaux de guidage.

Selon l'invention, les tôles annulaires peuvent présenter une épaisseur supérieure à 1 mm, notamment sensiblement égale 1 mm.

Selon l'invention, le dispositif peut également comporter des moyens de maintien axial des rouleaux de guidage entre les tôles annulaires.

Selon l'invention, la partie médiane des rouleaux de guidage peut comporter une collerette centrale coopérant axialement avec une saignée circonférentielle interne des trous oblongs définissant ainsi, au moins en partie, les moyens de maintien axial.

Avantageusement, ces rouleaux de guidage comportent des épaulements radiaux coopérant axialement avec des faces intérieures des tôles annulaires.

Avantageusement encore, les masses pendulaires sont constituées par l'assemblage de deux éléments latéraux et d'un élément central de manière à former la saignée circonférentielle interne des trous oblongs.

Alternativement, les rouleaux de guidage du dispositif d'amortissement pendulaire selon l'invention peuvent comporter des collerettes intérieures coopérant axialement avec des faces intérieures des tôles annulaires et des surfaces latérales des masses pendulaires pour définir les moyens de maintien axial.

L'invention concerne également une utilisation du dispositif d'amortissement pendulaire décrit ci-dessus notamment jusqu'à une vitesse de rotation de 10.000 tr/mn, notamment jusqu'à une vitesse de rotation de 15.000 tr/mn.

Ces quelques spécifications essentielles auront rendu évidents pour l'homme de métier les avantages apportés par le dispositif d'amortissement pendulaire selon l'invention par rapport à l'état de la technique antérieur, au plan de la prévention de la perte des rouleaux de guidage à des vitesses de rotation élevées sous l'effet de la force centrifuge.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS

La **Figure 1** est une vue générale éclatée en perspective d'un dispositif d'amortissement pendulaire connu de l'état de la technique.
Les **Figures 2a et 2b** montrent en coupe axiale des rouleaux de guidage agencés dans des masses pendulaires et sur un support annulaire du dispositif d'amortissement pendulaire montré sur la **Figure 1****.**
Les **Figures 3a et 3b** montrent des vues axiales d'un dispositif d'amortissement pendulaire selon la première forme de réalisation de l'invention, respectivement ouvert (une partie d'un support retiré) et fermé.
Les **Figures 4a, 4b et 4c** montrent en coupe axiale trois modes de réalisation des entretoises d'un dispositif d'amortissement pendulaire selon la première forme de réalisation de l'invention.
Les **Figures 5a et 5b** montrent en coupe axiale des rouleaux de guidage agencés dans des masses pendulaires et sur un support annulaire d'un dispositif d'amortissement pendulaire selon la deuxième forme de réalisation de l'invention.
La **Figure 6** est une vue générale éclatée en perspective d'un dispositif d'amortissement pendulaire selon la deuxième forme de réalisation de l'invention comportant des rouleaux de guidage comme ceux montrés sur la **Figure 5a****.**

### DESCRIPTION DES MODES DE REALISATION PREFERES DE L'INVENTION

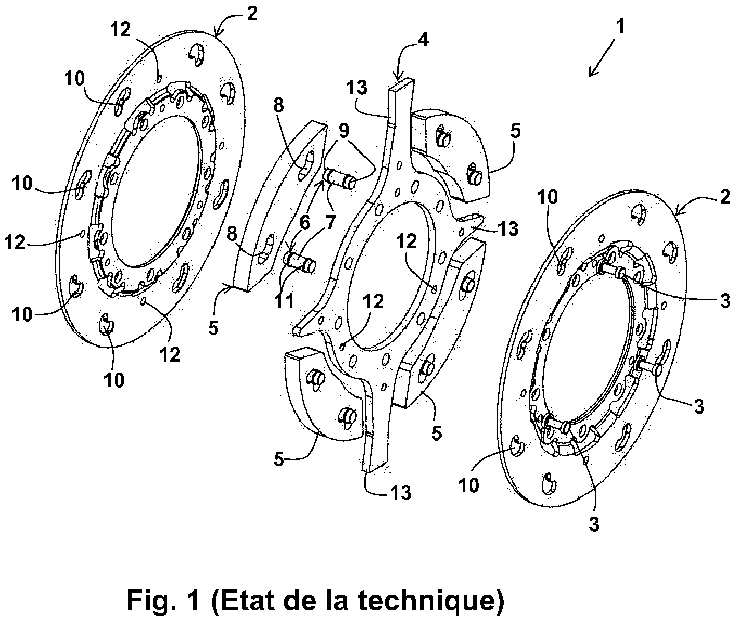

L'exemple de dispositif d'amortissement pendulaire 1 précité est représenté sur la **Figure 1****.**

Il comprend un support annulaire constitué essentiellement par deux tôles annulaires 2 en vis-à-vis montées par des boulons 3 sur une pièce intermédiaire 4 qui assure la rotation de l'ensemble 2, 4 et la transmission de couple.

A la périphérie du support 2, 4, sont montées entre les tôles annulaires 2 des masses pendulaires 5.

Ces masses pendulaires 5, de la forme générale d'un segment circulaire, sont mobiles grâce à des rouleaux de guidage 6 roulant, d'une part, au niveau de leur partie médiane 7 à l'intérieur de deux trous oblongs 8 dont elles sont munies, et, d'autre part, en s'appuyant et roulant à leurs extrémités 9 sur les bords d'ouvertures oblongues 10 formées dans les tôles annulaires 2.

De manière connue en soi, comme le montre bien la **Figure 1**, les trous oblongs 8 sont en forme d'arc présentant une première concavité tournée radialement vers l'extérieur du support 2, 4, et les ouvertures oblongues 10 sont également en forme d'arc présentant une deuxième concavité tournée radialement vers l'intérieur du support 2, 4, ce qui permet un mouvement pendulaire des masses pendulaires 5.

Les rouleaux de guidage 6, dans le mode de réalisation représenté du dispositif d'amortissement pendulaire connu, comportent des collerettes intérieures 11 qui maintiennent axialement ces rouleaux de guidage 6 entre les tôles annulaires 2, tout en évitant un frottement des masses pendulaires 5 contre ces tôles annulaires 2.

De nombreux rivets (seuls leurs emplacements 12 sont représentés) fixent les tôles annulaires 2 sur la pièce intermédiaire 4 qui comportent des excroissances radiales 13 entre les masses pendulaires 5.

Certaines applications d'un tel dispositif d'amortissement pendulaire 1 nécessitent une inertie la plus réduite possible, notamment pour un accouplement à une boîte de vitesses manuelle d'un véhicule automobile.

Une voie d'optimisation consiste à diminuer une épaisseur des tôles annulaires 2, par exemple jusqu'à 1 mm, de manière à réduire l'inertie de la pièce intermédiaire 4, et à diminuer le nombre de rivets.

Mais dans ce cas, à cause d'une rigidité insuffisante des tôles annulaires 2, l'entité inventive a constaté un écartement des tôles annulaires 2 sous l'effet de la force centrifuge et une perte des rouleaux de guidage 6 en fonctionnement à une vitesse de rotation élevée, en particulier lors d'essais de sécurité à 15.000 tr/ mn.

Afin de conserver une faible inertie tout en empêchant un tel écartement des tôles annulaires 2 à une vitesse de rotation élevée, l'entité inventive à optimisé un emplacement de moyens de liaison entre les tôles annulaires 2 pour les rendre les plus efficaces possible pour une même inertie donnée.

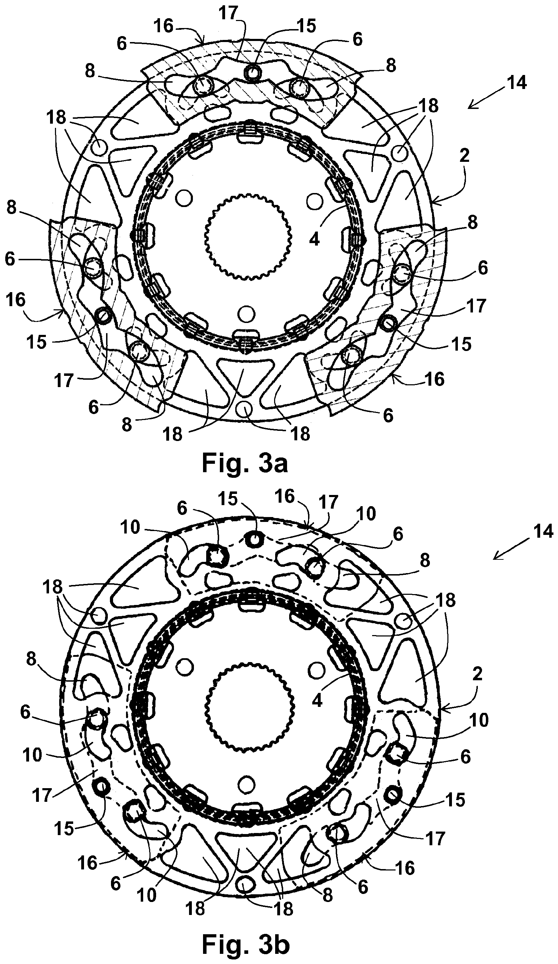

Dans le dispositif d'amortissement pendulaire 14 selon l'invention montré sur les **Figures 3a et 3b****,** les tôles annulaire 2 sont retenues au plus près des rouleaux de guidage 6 par des entretoises de liaison 15 traversant des masses pendulaires 16 comportant une lumière 17.

Comme le montrent bien les **Figures 3a et 3b****,** cette lumière 17, qui relie entre-eux les trous oblongs 8, est en forme d'arc présentant une troisième concavité tournée radialement vers l'extérieur du support 2, 4.

Quand les masses pendulaires 16 sont les plus éloignées du centre du support 2, 4, comme cela est représenté sur la **Figure 3a** (une des deux tôles annulaires 2 étant retirée), c'est-à-dire quand les efforts centrifuges sur les masses pendulaires 16 sont les plus grands, les entretoises de liaison 15 sont situées au milieu des lumières 17 entre les rouleaux de guidage 6, ce qui permet une répartition optimale des efforts de maintien sur les ouvertures oblongues 10.

Quand les masses pendulaires 16 sont les plus rapprochées du centre du support 2, 4, comme cela est représenté sur la **Figure 3b****,** l'entretoise de liaison 15 est plus éloignée de l'un des deux rouleaux de guidage 6 de chacune des masses pendulaires 16, et par conséquent elle devient moins efficace pour prévenir un écartement des tôles annulaires 2 au niveau des extrémités 9 des rouleaux de guidage 6; mais cela est compatible avec des efforts centrifuges plus faibles.

Compte tenu de la situation optimale des entretoises de liaison 15 à l'intérieur des masses pendulaires 16, des moyens de liaison supplémentaires entre les tôles annulaires 2 comme ceux connus de l'état de la technique (entretoises de liaison à l'extérieur des masses pendulaires) ne sont pas nécessaires dans le dispositif d'amortissement pendulaire selon l'invention 14. De plus, les tôles annulaires 2 sont avantageusement minces, de l'ordre de 1 mm, et leur inertie peut encore être diminuée par des évidements périphériques 18. Il est également possible de s'extraire de la présence du support annulaire circonférentiellement entre les masses pendulaires afin d'en diminuer l'inertie. Les tôles annulaires présentent alors une forme lobée dont les lobes comportent les trous oblongs.

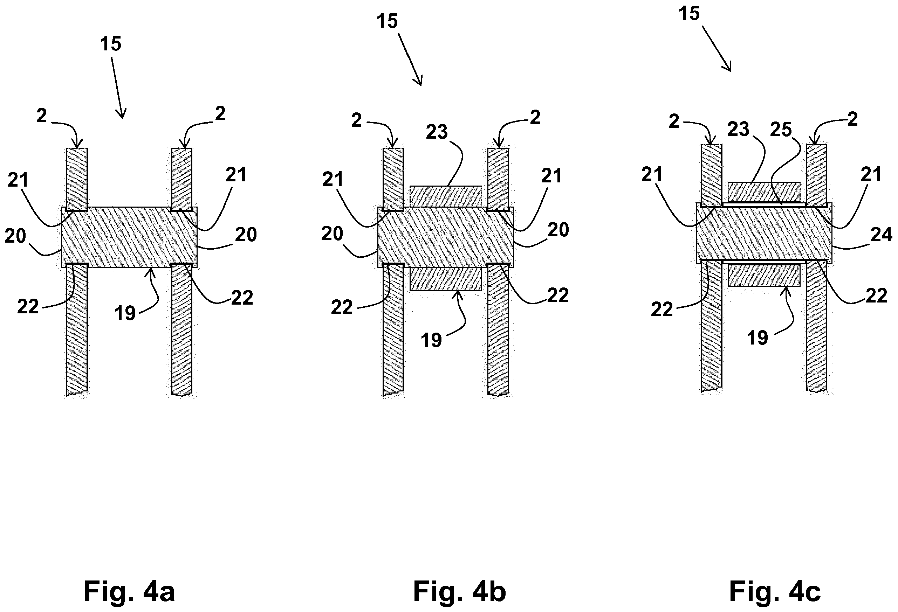

Dans un premier mode de réalisation du dispositif d'amortissement pendulaire selon l'invention 14, chacune des entretoises de liaison 15 est constituée d'un cylindre 19 comportant à chaque partie extrémale 20 des gorges annulaires 21 maintenues dans des trous circulaires 22 des tôles annulaires 2, comme le montre la **Figure 4a****.**

Dans un deuxième mode de réalisation du dispositif d'amortissement pendulaire selon l'invention 14, chacune des entretoises de liaison 15 est constituée d'un cylindre 19 comportant en outre un manchon 23 en matériau élastique, de préférence un élastomère, comme le montre la **Figure 4b****.**

Dans un troisième mode de réalisation du dispositif d'amortissement pendulaire selon l'invention 14, chacune des entretoises de liaison 15 est constituée d'un rivet 24 inséré dans un tube 25; elle comporte également un manchon 23 en matériau élastique, de préférence un élastomère, recouvrant le tube 25, comme le montre la **Figure 4c**

Le manchon 23 en matériau élastique agit dans une direction radiale et dans une direction tangentielle lors d'un arrêt du moteur auquel est accouplé le dispositif d'amortissement pendulaire selon l'invention 14, et en cas de saturation du dispositif 14. Quand les masses pendulaires 16 vont en butée, le manchon 23 touche un rouleau de guidage 6, qui touche la lumière 17.

Comme il va de soi, l'invention ne se limite pas aux seuls modes d'exécution préférentiels décrits ci-dessus.

En particulier, le nombre de masses pendulaires 16 représentées ne correspond qu'à un exemple, et peut être différent de quatre, notamment égal à trois.

Les moyens de liaison 15 entre les tôles annulaires 2 peuvent prendre une forme différente des formes décrites, notamment celle d'entretoises visées ou serties.

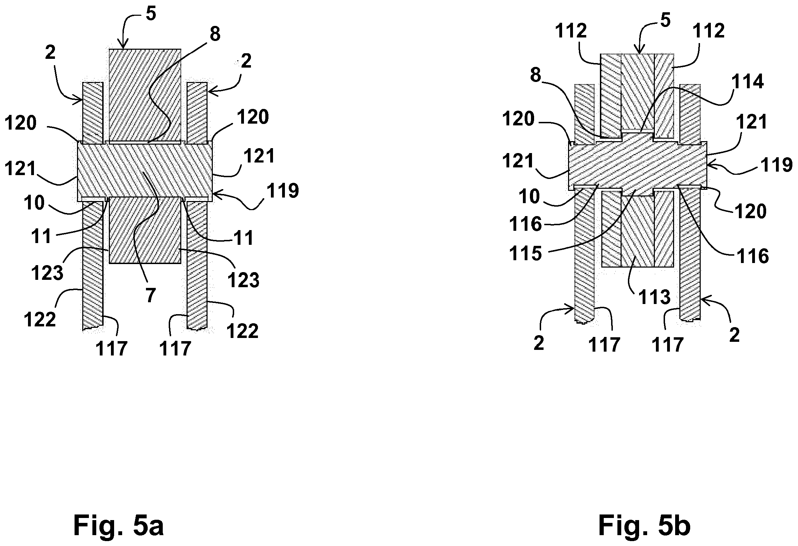

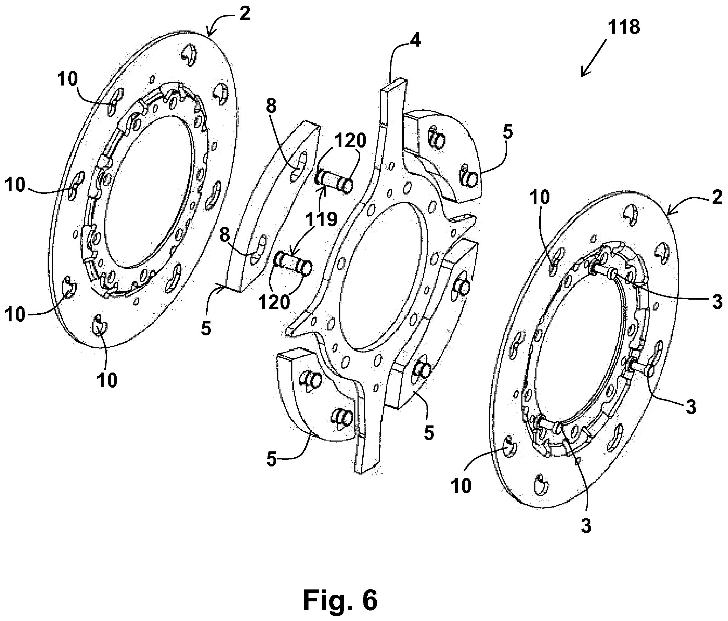

Une deuxième forme de réalisation de l'invention est plus particulièrement représentée sur les **Figures 5a, 5b** **et** **6****.**

L'exemple de dispositif d'amortissement pendulaire 1 précité - Figure 1 - comprend un support annulaire constitué essentiellement par deux tôles annulaires 2 en vis-à-vis montées par des boulons 3 sur une pièce intermédiaire 4 qui assure la rotation de l'ensemble 2, 4 et la transmission de couple.

A la périphérie du support 2, 4, sont montées entre les tôles annulaires 2 des masses pendulaires 5.

Ces masses pendulaires 5, de la forme générale d'un segment circulaire, sont mobiles grâce à des rouleaux de guidage 6 roulant, d'une part, au niveau de leur partie médiane 7 à l'intérieur de deux trous oblongs 8 dont elles sont munies, et, d'autre part, en s'appuyant et roulant à leurs extrémité 9 sur les bords d'ouvertures oblongues 10 formées dans les tôles annulaires 2.

De manière connue en soi, comme le montre bien la **Figure 1**, les trous oblongs 8 sont en forme d'arc présentant une première concavité tournée radialement vers l'extérieur du support 2, 4, et les ouvertures oblongues 10 sont également en forme d'arc présentant une seconde concavité tournée radialement vers l'intérieur du support 2, 4, ce qui permet un mouvement pendulaire des masses pendulaires 5.

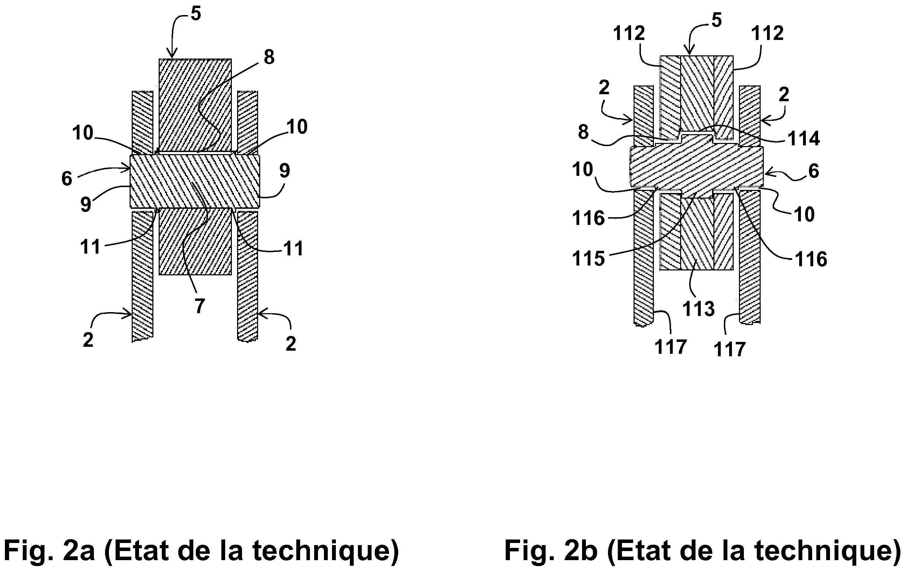

Comme le montre bien la **Figure 2a**, les rouleaux de guidage 6, dans ce dispositif d'amortissement pendulaire connu, comportent des collerettes intérieures 11 qui maintiennent axialement ces rouleaux de guidage 6 entre les tôles annulaires 2, tout en évitant un frottement des masses pendulaires 5 contre ces tôles annulaires 2.

En variante, dans le but de limiter un encombrement axial en éliminant les collerettes intérieures 11 tout en assurant un centrage des masses pendulaires 5 et des rouleaux de guidage 6 entre les tôles annulaires 2, il est également connu de ce dispositif des masses pendulaires 5 constituées par l'assemblage de deux éléments latéraux 112 et d'un élément central 113, comme montré sur la **Figure 2b****.**

Cet agencement permet de former une saignée circonférentielle 114 dans les trous oblongs 8 coopérant axialement avec une collerette centrale 115 des rouleaux de guidage 6 munis en outre d'épaulements radiaux 116 coopérant avec des faces intérieures 117 des tôles annulaires 2, pour atteindre le but recherché.

Certaines applications d'un tel dispositif d'amortissement pendulaire 1 nécessitent une inertie la plus réduite possible, notamment pour un accouplement à une boîte de vitesses manuelle d'un véhicule automobile.

Une voie d'optimisation consiste à diminuer une épaisseur des tôles annulaires 2, par exemple jusqu'à 1 mm.

Mais dans ce cas, à cause d'une rigidité insuffisante des tôles annulaires 2, l'entité inventive a constaté un écartement des tôles annulaires 2 sous l'effet de la force centrifuge et une perte des rouleaux de guidage 6 en fonctionnement à une vitesse de rotation élevée, en particulier lors d'essais de sécurité à 15.000 tr/ mn.

Une deuxième forme de réalisation de l'invention est représentée sur les **Figures 5a, 5b** **et** **6****.** Afin de conserver une faible inertie tout en empêchant un tel écartement des tôles annulaires 2 à une vitesse de rotation élevée, dans le dispositif d'amortissement pendulaire 118 selon l'invention, les rouleaux de guidage 119 de la deuxième forme de réalisation de l'invention comportent en outre des moyens de butée axiale 120.

Dans un premier mode de réalisation préféré de la deuxième forme de réalisation de l'invention montré sur la **Figure 5a**, les rouleaux de guidage 119 comportent des collerettes extérieures 120 à leurs extrémités 121.

Ces collerettes extérieures 120 coopèrent axialement avec des faces extérieures 122 des tôles annulaires 2.

Les rouleaux de guidage 119 et leurs collerettes extérieures 120 sont monobloc, ou, alternativement, comportent des collerettes extérieures 120 rapportées ou formées sur les extrémités 121 après un montage dans les trous oblongs 8 des masses pendulaires 5.

Dans ce premier mode de réalisation, les rouleaux de guidage 119 comportent également les collerettes intérieures 11 coopérant axialement avec des faces intérieures 117 des tôles annulaires 2 et des surfaces latérales 123 des masses pendulaires 5 définissant ainsi des moyens de maintien axial des rouleaux de guidage entre les tôles annulaires.

Dans un second mode de réalisation préféré de la deuxième forme de réalisation de l'invention montré sur la **Figure 5b**, les rouleaux de guidage 119 comportent aussi des collerettes extérieures 120 à leurs extrémités 121 pour empêcher l'écartement des tôles annulaires 2.

Toutefois, dans le but de diminuer l'encombrement axial du dispositif d'amortissement pendulaire 118 selon l'invention, les collerettes intérieures 11 sont supprimées et remplacées par des épaulements radiaux 116 de manière similaire aux rouleaux 6 connus de l'état de la technique montrés sur la **Figure 2b****.**

Les masses pendulaires 5 présentent aussi dans ce second mode de réalisation préféré de l'invention une structure en plusieurs éléments 112, 113 ménageant une saignée circonférentielle 114 coopérant axialement avec une collerette centrale 115 des rouleaux de guidage 119.

La vue générale éclatée du dispositif d'amortissement pendulaire 118 de la **Figure 6****,** dans le premier mode de réalisation préféré de la deuxième forme de réalisation de l'invention, permet de bien comprendre comment les collerettes extérieures 120 des rouleaux de guidage 119 empêchent l'écartement des tôles annulaires 2 quand ces rouleaux de guidage 119 se déplacent dans les ouvertures oblongues 10, même dans le cas de tôles annulaires 2 minces ayant une épaisseur de l'ordre de 1 mm et en fonctionnement à une vitesse de rotation élevée allant jusqu'à 15.000 tr/mn.

Dans l'un et l'autre des modes de réalisation de la deuxième forme de réalisation du dispositif d'amortissement pendulaire 118 selon l'invention, les collerettes extérieures 120 présentent de préférence une hauteur comprise entre 0,3 mm et 2 mm.

Comme il va de soi, l'invention ne se limite pas aux seuls modes d'exécution préférentiels décrits ci-dessus.

En particulier, le nombre de masses pendulaires 5 représentées ne correspond qu'à un exemple, et peut être différent de quatre, notamment égal à trois.

Les moyens de butées axiale 120 peuvent prendre une forme différente des collerettes extérieures 120 décrites, notamment celle de circlips ou d'anneaux d'arrêts associés à des gorges annulaires.

L'invention embrasse au contraire toutes les variantes possibles de réalisation dans la limite de l'objet des revendications ci-après.

## Revendications

1. Dispositif d'amortissement pendulaire (1, 14) de transmission de véhicule automobile du type de ceux comprenant:
- au moins un support annulaire (2, 4) constitué au moins de deux tôles annulaires (2) en vis-à-vis, destiné à être agencé entre un élément d'entrée de couple et un élément de sortie de couple, et destiné à être entraîné en rotation autour d'un axe de ladite transmission
- des masses pendulaires (16) montées de façon mobile entre lesdites tôles annulaires (2) en périphérie, lesdites masses pendulaires (16) étant de la forme générale d'un segment circulaire et comportant chacune une paire de trous oblongs (8) en forme d'arc présentant une première concavité tournée radialement vers l'extérieur dudit support annulaire (2, 4);
- des rouleaux de guidage (6, 119), présentant une partie médiane (7) roulant à l'intérieur desdits trous oblongs (8), et des extrémités (9, 121) roulant dans des ouvertures oblongues (10) formées dans lesdites tôles annulaires (2) en regard desdits trous oblongs (8) et présentant une forme d'arc ayant une deuxième concavité tournée radialement vers l'intérieur dudit support annulaire (2,4);
- des moyens de maintien axial (11) desdits rouleaux de guidage (6) entre lesdites tôles annulaires;
- des moyens de liaison (12, 13, 15) entre lesdites tôles annulaires;
**caractérisé en ce que** lesdits moyens de liaison (12, 13, 15) comprennent au moins une entretoise de liaison (15) traversant au moins l'une desdites masses pendulaires (16).

2. Dispositif d'amortissement pendulaire (14) selon la revendication 1, **caractérisé en ce que** ladite entretoise de liaison (15) est constituée d'un cylindre (19) comportant à chaque partie extrémale (20) des gorges annulaires (21) maintenues dans des trous circulaires (22) desdites tôles annulaires.

3. Dispositif d'amortissement pendulaire (14) selon la revendication 1, **caractérisé en ce que** ladite entretoise de liaison (15) est constituée d'un rivet (24) inséré dans un tube (25).

4. Dispositif d'amortissement pendulaire (14) selon l'une quelconque des revendications 1 à 3 précédentes, **caractérisé en ce que** ladite entretoise de liaison (15) comporte un manchon (23) en matériau élastique.

5. Dispositif d'amortissement pendulaire (14) selon la revendication 4, **caractérisé en ce que** ledit matériau est un élastomère.

6. Dispositif d'amortissement pendulaire (14) selon l'une quelconque des revendications 1 à 5 précédentes, **caractérisé en ce que** ladite entretoise de liaison (15) traverse une lumière (17) allongée reliant lesdits trous oblongs (8).

7. Dispositif d'amortissement pendulaire (14) selon la revendication 6, **caractérisé en ce que** ladite entretoise de liaison (15) coopère dans une direction radiale avec des bords de ladite lumière (17).

8. Dispositif d'amortissement pendulaire (14) selon la revendication 6, **caractérisé en ce que** ladite entretoise de liaison (15) coopère dans une direction tangentielle avec des bords de ladite lumière (17) et avec lesdits rouleaux de guidage (6).

9. Dispositif d'amortissement pendulaire (4) selon l'une quelconque des revendications 6 à 8 précédentes, **caractérisé en ce que** ladite lumière (17) est en forme d'arc présentant une troisième concavité tournée radialement vers l'extérieur dudit support annulaire (2, 4).

10. Dispositif d'amortissement pendulaire (1, 118) selon la revendication 1, **caractérisé en ce que** lesdits rouleaux de guidage (119) comportent en outre des moyens de butée axiale (120) empêchant un écartement latéral desdites tôles annulaires (2).

11. Dispositif d'amortissement pendulaire (118) selon la revendication 10, **caractérisé en ce que** lesdits moyens de butée axiale (120) sont constitués par des collerettes extérieures (120) agencées auxdites extrémités (121) desdits rouleaux de guidage (119) coopérant axialement avec des faces extérieures (122) desdites tôles annulaires (2).

12. Dispositif d'amortissement pendulaire (118) selon la revendication 11, **caractérisé en ce que** lesdites collerettes extérieures (120) ont une hauteur comprise entre 0,3 mm et 2 mm,
ou **en ce que** lesdites collerettes extérieures (120) sont rapportées sur lesdites extrémités (121).

13. Dispositif d'amortissement pendulaire (118) selon l'une quelconque des revendications 10 à 12 précédentes, **caractérisé en ce que** lesdites tôles annulaires (2) présentent une épaisseur sensiblement égale 1 mm.

14. Dispositif d'amortissement pendulaire (118) selon l'une quelconque des revendications 10 à 13 précédentes, **caractérisé en ce que** ladite partie médiane (7) desdits rouleaux de guidage (10) comporte une collerette centrale (115) coopérant axialement avec une saignée circonférentielle interne (114) desdits trous oblongs (8),
Ou **en ce que** lesdits rouleaux de guidage (119) comportent des épaulements radiaux (116) coopérant axialement avec des faces intérieures (117) desdites tôles annulaires (2).

15. Utilisation d'un dispositif d'amortissement pendulaire (118) selon l'une quelconque des revendications 1 à 14 précédentes jusqu'à une vitesse de rotation de 15.000 tr/mn.

## Patentansprüche

1. Pendeldämpfungsvorrichtung (1, 14) eines Kraftfahrzeuggetriebes des Typs, der umfasst:
- mindestens einen aus mindestens zwei gegenüberliegenden ringförmigen Platten (2) bestehenden ringförmigen Halter (2, 4), der dazu bestimmt ist, zwischen einem Drehmoment-Eingangselement und einem Drehmoment-Ausgangselement angeordnet zu werden, und dazu bestimmt ist, um eine Achse des Getriebes drehend angetrieben zu werden;
- Pendelmassen (16), die zwischen den ringförmigen Platten (2) beweglich am Umfang angebracht sind, wobei die Pendelmassen (16) die allgemeine Form eines Kreissegments haben und jeweils ein Paar Langlöcher (8) in Form eines Bogens aufweisen, der eine radial der Außenseite des ringförmigen Halters (2, 4) zugewandte erste Konkavität aufweist;
- Führungsrollen (6, 119), die einen Mittelteil (7) aufweisen, der im Inneren der Langlöcher (8) rollt, und Enden (9, 121), die in länglichen Öffnungen (10) rollen, die in den ringförmigen Platten (2) gegenüber den Langlöchern (8) ausgebildet sind und eine Bogenform mit einer radial dem Inneren des ringförmigen Halters (2, 4) zugewandten zweiten Konkavität aufweisen;
- Mittel zum axialen Halten (11) der Führungsrollen (6) zwischen den ringförmigen Platten;
- Mittel zur Verbindung (12, 13, 15) zwischen den ringförmigen Platten;
**dadurch gekennzeichnet, dass** die Verbindungsmittel (12, 13, 15) mindestens einen Verbindungssteg (15) umfassen, der mindestens eine der Pendelmassen (16) durchquert.

2. Pendeldämpfungsvorrichtung (14) nach Anspruch 1, **dadurch gekennzeichnet, dass** der Verbindungssteg (15) aus einem Zylinder (19) besteht, der an jedem Endteil (20) ringförmige Auskehlungen (21) aufweist, die in kreisförmigen Löchern (22) der ringförmigen Platten gehalten werden.

3. Pendeldämpfungsvorrichtung (14) nach Anspruch 1, **dadurch gekennzeichnet, dass** der Verbindungssteg (15) aus einem Niet (24) besteht, der in ein Rohr (25) eingesetzt ist.

4. Pendeldämpfungsvorrichtung (14) nach einem der vorhergehenden Ansprüche 1 bis 3, **dadurch gekennzeichnet, dass** der Verbindungssteg (15) eine Hülse (23) aus elastischem Material aufweist.

5. Pendeldämpfungsvorrichtung (14) nach Anspruch 4, **dadurch gekennzeichnet, dass** das Material ein Elastomer ist.

6. Pendeldämpfungsvorrichtung (14) nach einem der vorhergehenden Ansprüche 1 bis 5, **dadurch gekennzeichnet, dass** der Verbindungssteg (15) eine lang gestreckte Öffnung (17) durchquert, welche die Langlöcher (8) verbindet.

7. Pendeldämpfungsvorrichtung (14) nach Anspruch 6, **dadurch gekennzeichnet, dass** der Verbindungssteg (15) in einer radialen Richtung mit Rändern der Öffnung (17) zusammenwirkt.

8. Pendeldämpfungsvorrichtung (14) nach Anspruch 6, **dadurch gekennzeichnet, dass** der Verbindungssteg (15) in einer tangentialen Richtung mit Rändern der Öffnung (17) und mit den Führungsrollen (6) zusammenwirkt.

9. Pendeldämpfungsvorrichtung (4) nach einem der vorhergehenden Ansprüche 6 bis 8, **dadurch gekennzeichnet, dass** die Öffnung (17) die Form eines Bogens hat, der eine radial der Außenseite des ringförmigen Halters (2, 4) zugewandte dritte Konkavität aufweist.

10. Pendeldämpfungsvorrichtung (1, 118) nach Anspruch 1, **dadurch gekennzeichnet, dass** die Führungsrollen (119) außerdem Axialanschlagmittel (120) aufweisen, die ein seitliches Entfernen der ringförmigen Platten (2) voneinander verhindern.

11. Pendeldämpfungsvorrichtung (118) nach Anspruch 10, **dadurch gekennzeichnet, dass** die Axialanschlagmittel (120) aus an den Enden (121) der Führungsrollen (119) angeordneten äußeren Flanschen (120) bestehen, die axial mit Außenseiten (122) der ringförmigen Platten (2) zusammenwirken.

12. Pendeldämpfungsvorrichtung (118) nach Anspruch 11, **dadurch gekennzeichnet, dass** die äußeren Flansche (120) eine Höhe zwischen 0,3 mm und 2 mm aufweisen,
oder dadurch, dass die äußeren Flansche (120) an die Enden (121) angesetzt sind.

13. Pendeldämpfungsvorrichtung (118) nach einem der vorhergehenden Ansprüche 10 bis 12, **dadurch gekennzeichnet, dass** die ringförmigen Platten (2) eine Dicke aufweisen, die ungefähr 1 mm beträgt.

14. Pendeldämpfungsvorrichtung (118) nach einem der vorhergehenden Ansprüche 10 bis 13, **dadurch gekennzeichnet, dass** der Mittelteil (7) der Führungsrollen (10) einen mittigen Flansch (115) aufweist, der axial mit einer inneren Umfangsnut (114) der Langlöcher (8) zusammenwirkt,
oder dadurch, dass die Führungsrollen (119) radiale Ansätze (116) aufweisen, die axial mit Innenseiten (117) der ringförmigen Platten (2) zusammenwirken.

15. Verwendung einer Pendeldämpfungsvorrichtung (118) nach einem der vorhergehenden Ansprüche 1 bis 14 bis zu einer Drehzahl von 15.000 U/min.

## Claims

1. Pendulum damping device (1, 14) for a motor vehicle transmission of the type comprising:
- at least one annular support (2, 4) that is made up of at least two facing annular plates (2), is intended to be arranged between a torque input element and a torque output element and is intended to be driven in rotation about an axis of said transmission,
- pendulum masses (16) movably mounted between said annular plates (2) on the periphery, said pendulum masses (16) having the overall shape of a circular segment and each having a pair of oblong holes (8) in the shape of an arc with a first concavity oriented radially towards the outside of said annular support (2, 4);
- guide rollers (6, 119) having a median portion (7) rolling inside said oblong holes (8), and ends (9, 121) rolling in oblong openings (10) that are formed in said annular plates (2) facing said oblong holes (8) and have the shape of an arc with a second concavity oriented radially towards the inside of said annular support (2, 4);
- axial retention means (11) for axially retaining said guide rollers (6) between said annular plates;
- connecting means (12, 13, 15) between said annular plates;
**characterized in that** said connecting means (12, 13, 15) comprise at least one connecting spacer (15) passing through at least one of said pendulum masses (16) .

2. Pendulum damping device (14) according to Claim 1, **characterized in that** said connecting spacer (15) is made up of a cylinder (19) having, at each end portion (20), annular grooves (21) extending in circular holes (22) in said annular plates.

3. Pendulum damping device (14) according to Claim 1, **characterized in that** said connecting spacer (15) is made up of a rivet (24) inserted in a tube (25).

4. Pendulum damping device (14) according to any one of the preceding Claims 1 to 3, **characterized in that** said connecting spacer (15) has a sleeve (23) made of elastic material.

5. Pendulum damping device (14) according to Claim 4, **characterized in that** said material is an elastomer.

6. Pendulum damping device (14) according to any one of the preceding Claims 1 to 5, **characterized in that** said connecting spacer (15) passes through an elongate gap (17) connecting said oblong holes (8).

7. Pendulum damping device (14) according to Claim 6, **characterized in that** said connecting spacer (15) interacts with edges of said gap (17) in a radial direction.

8. Pendulum damping device (14) according to Claim 6, **characterized in that** said connecting spacer (15) interacts with edges of said gap (17) and with said guide rollers (6) in a tangential direction.

9. Pendulum damping device (4) according to any one of the preceding Claims 6 to 8, **characterized in that** said gap (17) has the shape of an arc with a third concavity oriented radially towards the outside of said annular support (2, 4).

10. Pendulum damping device (1, 118) according to Claim 1, **characterized in that** said guide rollers (119) moreover have axial stop means (120) preventing said annular plates (2) from laterally moving apart.

11. Pendulum damping device (118) according to Claim 10, **characterized in that** said axial stop means (120) are made up of outer flanges (120) that are arranged at said ends (121) of said guide rollers (119) and axially interact with outer faces (122) of said annular plates (2) .

12. Pendulum damping device (118) according to Claim 11, **characterized in that** said outer flanges (120) have a height of between 0.3 mm and 2 mm, or **in that** said outer flanges (120) are added to said ends (121).

13. Pendulum damping device (118) according to any one of the preceding Claims 10 to 12, **characterized in that** said annular plates (2) have a thickness substantially equal to 1 mm.

14. Pendulum damping device (118) according to any one of the preceding Claims 10 to 13, **characterized in that** said median portion (7) of said guide rollers (10) has a central flange (115) axially interacting with an internal circumferential kerf (114) of said oblong holes (8), or **in that** said guide rollers (119) have radial shoulders (116) axially interacting with inner faces (117) of said annular plates (2).

15. Use of a pendulum damping device (118) according to any one of the preceding Claims 1 to 14, up to a rotational speed of 15 000 rpm.
